# EUROPEAN PATENT APPLICATION

(11) **EP 2 690 264 A1**
(43) Date of publication of application: **29.01.2014**
(21) Application number: 11861483.3
(22) Date of filing: 22.03.2011
(51) Int. Cl.: F01N 3/20, F01N 3/08

(54) **SYSTEM FOR DETERMINING DETERIORATION OF CATALYST**

(71) Applicant: TOYOTA JIDOSHA KABUSHIKI KAISHA, Toyota-shi, Aichi-ken, 471-8571 (JP)
(72) Inventor: NAKAMURA, Yoshitaka, Toyota-shi, Aichi-ken 471-8571 (JP); SAITO, Hirotaka, Toyota-shi, Aichi-ken 471-8571 (JP); KIDOKORO, Toru, Toyota-shi, Aichi-ken 471-8571 (JP); SAWADA, Hiroshi, Toyota-shi, Aichi-ken 471-8571 (JP); SAKURAI, Kenji, Toyota-shi, Aichi-ken 471-8571 (JP)
(74) Representative: Kuhnen & Wacker
(86) International application number: PCT/JP2011/056830
(87) International publication number: WO 2012/127624

(57) **Abstract**

The determination of deterioration of a NOx storage reduction catalyst (4) can be carried out in a more accurate manner. Provision is made for a supply device (5) that supplies a reducing agent to the NOx catalyst (4) thereby to change an air fuel ratio of an exhaust gas passing through the NOx catalyst (4), an NH₃ detection device (8) that detects NH₃ in the exhaust gas at the downstream side of the NOx catalyst (4), a control device (10) that adjusts an amount of the reducing agent in such a manner that the air fuel ratio of the exhaust gas becomes a predetermined rich air fuel ratio, and a determination device (10) that makes a determination that the NOx catalyst (4) has deteriorated, when a detected value of the NH₃ detection device (8) becomes equal to or greater than a threshold value, at the time of supplying the reducing agent while adjusting the amount of the reducing agent in such a manner that the air fuel ratio of the exhaust gas becomes the predetermined rich air fuel ratio.

## Description

### [TECHNICAL FIELD]

The present invention relates to a catalyst deterioration determination system.

### [BACKGROUND ART]

NOx in an exhaust gas discharged when an internal combustion engine is in a lean burn condition can be stored by a NOx storage reduction catalyst (hereinafter simply referred to as a NOx catalyst), and then, the NOx thus stored can be caused to release from the NOx catalyst and to be reduced to N₂ by making an air fuel ratio rich temporarily. In addition, there has been known a technique in which a peak value of an output of an air fuel ratio sensor is obtained at the time of rich burn combustion, a NOx storage capacity of the NOx catalyst is estimated based on the peak value, and a deterioration of the NOx catalyst is detected based on the NOx storage capacity thus estimated (for example, refer to a first patent document).

Also, it is known that in the early stage of starting of the supply of a reducing agent, a part of NOx desorbed from a NOx catalyst flows out of the NOx catalyst without being reduced (for example, refer to a second patent document).

Here, in cases where lower HC such as gasoline is supplied as the reducing agent, a deterioration of the NOx catalyst can be detected according to the above-mentioned technique, but in cases where higher HC such as light oil is supplied as the reducing agent, a detected value of the air fuel ratio sensor may deviate from its actual value, and hence, there will be a fear that the detection accuracy of the deterioration of the NOx catalyst may become low.

### [PRIOR ART REFERENCES]

### [PATENT DOCUMENTS]

[First Patent Document] Japanese patent application laid-open No. 2000-034946
[Second Patent Document] Japanese patent application laid-open No. 2007-046515

### [SUMMARY OF THE INVENTION]

### [PROBLEMS TO BE SOLVED BY THE INVENTION]

The present invention has been made in view of the problem as referred to above, and has for its object to provide a technique of performing a deterioration determination of a NOx storage reduction catalyst in a more accurate manner.

### [MEANS FOR SOLVING THE PROBLEMS]

In order to achieve the above-mentioned object, a catalyst deterioration determination system according to the present invention, which determines a deterioration of a NOx storage reduction catalyst which is arranged in an exhaust passage of an internal combustion engine in such a manner that it stores NOx and reduces the NOx stored therein by the supply of a reducing agent, is provided with:
a supply device that supplies the reducing agent to said NOx storage reduction catalyst thereby to change an air fuel ratio of an exhaust gas passing through said NOx storage reduction catalyst;
an NH₃ detection device that detects NH₃ in the exhaust gas at the downstream side of said NOx storage reduction catalyst;
a control device that adjusts an amount of the reducing agent in such a manner that the air fuel ratio of the exhaust gas becomes a predetermined rich air fuel ratio at the time when the reducing agent is supplied from said supply device; and
a determination device that makes a determination that said NOx storage reduction catalyst has deteriorated, when a detected value of said NH₃ detection device becomes equal to or greater than a threshold value, at the time of supplying the reducing agent while adjusting the amount of the reducing agent in such a manner that the air fuel ratio of the exhaust gas becomes said predetermined rich air fuel ratio.

The NOx storage reduction catalyst stores NOx at the time of the air fuel ratio of the exhaust gas being lean, and reduces the NOx having been stored when the reducing agent exists. The supply device can supply the reducing agent to the NOx storage reduction catalyst. The reducing agent may be supplied into the exhaust gas flowing through the exhaust passage, or may be caused to discharge from the internal combustion engine. Then, the air fuel ratio of the exhaust gas is made lower by supplying the reducing agent.

Here, when the reducing agent is supplied to the NOx catalyst, NOx released from the NOx catalyst or NOx flowing into the NOx catalyst may react with the reducing agent, so that NH₃ may be generated. The amount of NH₃ thus generated changes according to the extent of the deterioration of the NOx catalyst and the air fuel ratio of the exhaust gas.

For example, in cases where the NOx catalyst is normal, when the reducing agent is supplied in such a manner that the air fuel ratio becomes a predetermined rich air fuel ratio which is slightly richer than a stoichiometric air fuel ratio, the reducing agent will be oxidized by O₂ released from the NOx catalyst. In that case, the reducing agent will be in short supply, so the amount of NOx released from the NOx catalyst decreases, thus making it possible to suppress the generation of NH₃.

On the other hand, in cases where the NOx catalyst has deteriorated, the storage capacity thereof for oxygen also deteriorates. For this reason, even if the reducing agent is supplied in such a manner that the air fuel ratio of the exhaust gas becomes the predetermined rich air fuel ratio which is slightly richer than the stoichiometric air fuel ratio, the amount of O₂ to be released is small, so the oxidation of the reducing agent is not facilitated, and the reducing agent arrives at the NOx catalyst. As a result, the NOx released from the NOx catalyst reacts with the reducing agent thereby to generate NH₃. That is, the higher the extent of the deterioration of the NOx catalyst, the more the reducing agent reacts with NOx, so the amount of NH₃ to be generated increases.

In that case, the detected value of the NH₃ detection device at the time when the reducing agent is supplied in such a manner that the air fuel ratio of the exhaust gas becomes the predetermined rich air fuel ratio slightly richer than the stoichiometric air fuel ratio becomes larger according to the extent of the deterioration of the NOx catalyst. Then, if the detected value of the NH₃ detection device at the time when the NOx catalyst is on the verge of whether or not it has deteriorated is set as a threshold value, when the detected value of the NH₃ detection device becomes equal to or greater than the threshold value, a determination can be made that said NOx catalyst has deteriorated.

Here, note that the predetermined rich air fuel ratio is an air fuel ratio which is slightly richer than the stoichiometric air fuel ratio, and is also an air fuel ratio at which the deteriorated NOx catalyst generates an amount of NH₃ which is more than that to be generated by the normal NOx catalyst. When the air fuel ratio becomes lower than that (i.e., the predetermined rich air fuel ratio), the amount of NH₃ to be generated by the NOx catalyst even if it is normal will become more than that to be generated by the deteriorated NOx catalyst. On the other hand, at the stoichiometric air fuel ratio and at lean air fuel ratios, almost no NH₃ is generated, irrespective of the extent of the deterioration of the NOx catalyst. Accordingly, by adjusting the air fuel ratio to the predetermined rich air fuel ratio which is slightly richer than the stoichiometric air fuel ratio, the normal NOx catalyst and the deteriorated NOx catalyst can be discriminated from each other based on the detected value of the NH₃ detection device.

Further, in the present invention, provision is further made for a storage amount detection device that detects or estimates an amount of NOx which has been stored in said NOx storage reduction catalyst.

When the amount of NOx having been stored in said NOx storage reduction catalyst is equal to or more than a predetermined amount, said determination device can make a determination as to whether or not said NOx storage reduction catalyst has deteriorated.

Here, in cases where NOx is not stored in the NOx catalyst, NOx is not released from the NOx catalyst, even if the reducing agent is supplied in such a manner that the air fuel ratio becomes the predetermined rich air fuel ratio, and hence, almost no NH₃ is generated. Accordingly, if the NOx catalyst has deteriorated, too, the detected value of the NH₃ detection device becomes small, and a difference thereof with respect to the detected value for the normal NOx catalyst becomes small, so there is a fear that the accuracy of the determination of deterioration may become low. On the other hand, if it is in a state where a sufficient amount of NOx for generating NH₃ is stored, there will be a difference in the amount of NH₃ to be generated between the normal catalyst and the deteriorated catalyst, and hence, the accuracy of the determination of deterioration becomes high. That is, the predetermined amount can be a storage or occlusion amount of NOx when the detected value of the NH₃ detection device becomes the threshold value, in cases where the reducing agent is supplied to the deteriorated NOx catalyst in such a manner that the air fuel ratio of the exhaust gas becomes the predetermined rich air fuel ratio. In addition, the predetermined amount may also be a storage or occlusion amount of NOx at which there will be a difference in the amount of NH₃ to be generated between the normal catalyst and the deteriorated catalyst, in cases where the reducing agent is supplied so that the air fuel ratio of the exhaust gas becomes the predetermined rich air fuel ratio.

In addition, in the present invention, when a maximum value of the detected value of said NH₃ detection device is equal to or greater than the threshold value, said determination device can make a determination that said NOx storage reduction catalyst has deteriorated.

Here, the higher the extent of the deterioration of the NOx catalyst, the more the amount of NH₃ to be generated becomes. For this reason, the maximum value of the detected value of the NH₃ detection device becomes larger. The threshold value is set as a value at which it becomes impossible to permit this maximum value of the detected value of the NH₃ detection device. That is, the threshold value can be a lower limit value of the maximum value of the detected value of the NH₃ detection device at the time when the NOx catalyst has deteriorated. Then, it is possible to determine whether said NOx catalyst has deteriorated, by making a comparison between the maximum value of the detected value of the NH₃ detection device and the threshold value. Here, note that when the maximum value of the detected value of the NH₃ detection device is smaller than the threshold value, a determination is made that the NOx catalyst is normal. Thus, by making a determination of deterioration using the maximum value of the extent of the deterioration of the NOx catalyst, which is in correlation with the detected value of the NH₃ detection device, the determination of deterioration can be carried out easily and in an accurate manner.

Moreover, in the present invention, when an integrated value of the detected value of said NH₃ detection device is equal to or greater than the threshold value, said determination device can make a determination that said NOx storage reduction catalyst has deteriorated.

Similar to the maximum value of the detected value of the NH₃ detection device, the integrated value of the detected value of the NH₃ detection device becomes larger according to the increasing extent of the deterioration of the NOx catalyst. The integrated value is obtained by adding the detected value of the NH₃ detection device for each predetermined period of time, for example. The threshold value is set as a value at which it becomes impossible to permit this integrated value of the detected value of the NH₃ detection device. Then, by making a comparison between the integrated value of the detected value of the NH₃ detection device and the threshold value, it is possible to determine whether the NOx catalyst has deteriorated. In this case, the threshold value can be a lower limit value of the integrated value of the detected value of the NH₃ detection device at the time when the NOx catalyst has deteriorated. Here, note that when the integrated value of the detected value of the NH₃ detection device is smaller than the threshold value, a determination is made that the NOx catalyst is normal. Thus, by making a determination of deterioration using the integrated value of the extent of the deterioration of the NOx catalyst, which is in correlation with the detected value of the NH₃ detection device, the determination of deterioration can be carried out easily and in an accurate manner.

In addition, in the present invention, said control device can adjust the amount of the reducing agent in such a manner that the air fuel ratio of the exhaust gas becomes a value between from 14 to 14.7.

That is, the predetermined rich air fuel ratio is set to a value between from 14 to 14.7. Here, when the air fuel ratio of the exhaust gas becomes lower than 14, even in the case of the normal NOx catalyst, the detected value of the NH₃ detection device becomes large, thus giving rise to a fear that it may become equal to or greater than the threshold value. For this reason, there is a fear that the accuracy of the determination of deterioration may become low. On the other hand, when the air fuel ratio of the exhaust gas becomes a lean air fuel ratio, almost no NH₃ is generated, irrespective of whether the NOx catalyst is normal or in a deteriorated state, and so, it becomes difficult to perform the determination of deterioration of the NOx catalyst based on the detected value of the NH₃ detection device. Accordingly, by adjusting the amount of the reducing agent so that the air fuel ratio of the exhaust gas becomes a value between from 14 to 14.7, it is possible to make large a difference in the detected value of the NH₃ detection device between the case where the NOx catalyst is normal and the case where it has deteriorated. As a result of this, the accuracy of the determination of deterioration can be improved.

Moreover, in the present invention, said NH₃ detection device may be a NOx sensor which detects NOx and NH₃ in the exhaust gas.

Here, the NOx sensor detects NH₃ as well as NOx. For this reason, it can not be determined whether the detected value of the NOx sensor is the concentration of NO₂ or the concentration of NH₃, for example. However, when the reducing agent is supplied until the air fuel ratio of the exhaust gas becomes a rich air fuel ratio, almost no NOx will be included in the exhaust gas at the downstream side of the NOx storage reduction catalyst. For this reason, the detected value of the NOx sensor will indicate the concentration of NH₃. Accordingly, NH₃ can be detected by the use of the NOx sensor.

### [EFFECT OF THE INVENTION]

According to the present invention, the determination of deterioration of the NOx storage reduction catalyst can be carried out in a more accurate manner.

### [BRIEF DESCRIPTION OF THE DRAWINGS]

[Fig. 1] is a view showing the schematic construction of an internal combustion engine and its exhaust system according to an embodiment of the present invention.
[Fig. 2] is a view for explaining a NOx storage or adsorption function in a NOx catalyst.
[Fig. 3] is a view for explaining a NOx reduction function in the NOx catalyst.
[Fig. 4] is a time chart showing the change over time of an NH₃ concentration at the downstream side of the NOx catalyst when rich spike control is carried out with NOx being not stored in the NOx catalyst, in cases where the NOx catalyst is normal.
[Fig. 5] is a time chart showing the change over time of an NH₃ concentration at the downstream side of the NOx catalyst when rich spike control is carried out with a predetermined amount of NOx being stored in the NOx catalyst, in cases where the NOx catalyst is normal.
[Fig. 6] is a time chart showing the change over time of an NH₃ concentration at the downstream side of the NOx catalyst when rich spike control is carried out with NOx being not stored in the NOx catalyst, in cases where the NOx catalyst has deteriorated.
[Fig. 7] is a time chart showing the change over time of an NH₃ concentration at the downstream side of the NOx catalyst when rich spike control is carried out with a predetermined amount of NOx being stored in the NOx catalyst, in cases where the NOx catalyst has deteriorated.
[Fig. 8] is a time chart showing the change over time of the storage or occlusion amount of NOx in the NOx catalyst and the speed of a vehicle on which the internal combustion engine is mounted.
[Fig. 9] is a flow chart showing a flow for the determination of deterioration of the NOx catalyst.

### [MODE FOR CARRYING OUT THE INVENTION]

Hereinafter, reference will be made to a specific embodiment of a catalyst deterioration determination system according to the present invention based on the attached drawings.

### [First Embodiment]

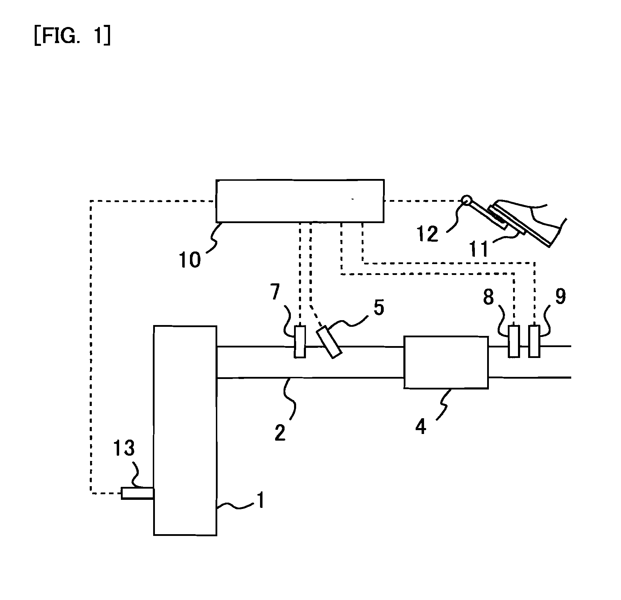

Fig. 1 is a view showing the schematic construction of an internal combustion engine and its exhaust system according to this embodiment of the present invention. The internal combustion engine 1 shown in Fig. 1 is a four-cycle diesel engine of a water cooled type having four cylinders.

An exhaust passage 2 is connected to the internal combustion engine 1. In the middle of this exhaust passage 2, there is arranged a NOx storage reduction catalyst 4 (hereinafter, referred to as a NOx catalyst 4).

The NOx catalyst 4 is constructed such that alumina (Al₂O₃), for example, is used as a carrier, and barium (Ba), cerium (Ce) and platinum (Pt), for example, are carried on the carrier.

This NOx catalyst 4 has a function of occluding or storing NOx contained in an incoming exhaust gas when the oxygen concentration of the exhaust gas is high, and of reducing the occluded or stored NOx when the oxygen concentration of the incoming exhaust gas becomes low and when a reducing agent exists.

In addition, an injection valve 5, which serves to inject the reducing agent into the exhaust gas, is mounted on the exhaust passage 2 at the upstream side of the NOx catalyst 4. The injection valve 5 is opened by means of a signal from an ECU 10 which will be described later, so that it injects the reducing agent into the exhaust gas. For the reducing agent, there is used, for example, fuel (light oil) in the internal combustion engine 1, but it is not limited to this.

The fuel injected from the injection valve 5 into the exhaust passage 2 decreases the air fuel ratio of the exhaust gas which has flowed from an upstream side of the exhaust passage 2. Then, at the time of reducing the NOx stored in the NOx catalyst 4, so-called rich spike control is carried out in which the air fuel ratio of the exhaust gas flowing into the NOx catalyst 4 is caused to decrease in a relatively short period of time by injecting fuel from the injection valve 5. The amount of the reducing agent to be injected from the injection valve 5 is decided based, for example, on an operating state (the number of engine revolutions per unit time and the amount of fuel injection) of the internal combustion engine 1. The relation among the amount of reducing agent, the number of engine revolutions per unit time and the engine load can be mapped in advance. In addition, an air fuel ratio sensor may be mounted on the exhaust passage 2, and feedback control may performed on the amount of the reducing agent in such a manner that the air fuel ratio detected by the air fuel ratio sensor becomes a target value.

Here, note that in this embodiment, the injection valve 5 corresponds to a supply device in the present invention. In addition, the reducing agent can also be supplied by causing unburnt fuel to be discharged from the internal combustion engine 1. That is, provision can be made for a cylinder injection valve which serves to inject fuel into a cylinder, so that a gas containing a large amount of reducing agent can also be caused to discharge from the internal combustion engine 1, by performing auxiliary injection (post injection) in which fuel is once again injected during an expansion stroke or an exhaust stroke after main injection is carried out from the cylinder injection valve, or by delaying the timing of fuel injection from the cylinder injection valve.

Moreover, an upstream side NOx sensor 7 for measuring the concentration of NOx in the exhaust gas is mounted on the exhaust passage 2 at a location upstream of the injection valve 5. Also, a downstream side NOx sensor 8 for measuring the concentration of NOx in the exhaust gas and a temperature sensor 9 for measuring the temperature of the exhaust gas are mounted on the exhaust passage 2 at locations downstream of the NOx catalyst 4. Here, note that in this embodiment, the downstream side NOx sensor 8 corresponds to an NH₃ detection device or a NOx sensor in the present invention.

In the internal combustion engine 1 constructed as stated above, there is arranged in combination therewith the ECU 10 which is an electronic control unit for controlling the internal combustion engine 1. This ECU 10 controls the operating state of the internal combustion engine 1 in accordance with the operating conditions of the internal combustion engine 1 and/ or driver's requirements.

Further, besides the above-mentioned sensors, an accelerator opening sensor 12, which serves to detect an engine load by outputting an electrical signal corresponding to an amount by which a driver depressed an accelerator pedal 11, and a crank position sensor 13, which serves to detect the number of revolutions per minute of the engine, are connected to the ECU 10 through electrical wiring, and the output signals of these variety of kinds of sensors are inputted to the ECU 10.

On the other hand, the injection valve 5 is connected to the ECU 10 through electrical wiring, so that the opening and closing timing of the injection valve 5 is controlled by the ECU 10. Here, note that in this embodiment, the ECU 10, which adjusts the amount of the reducing agent to be supplied from the injection valve 5, corresponds to a control device in the present invention.

Then, the ECU 10 causes an amount of the reducing agent to be injected from the injection valve 5 in a range in which the air fuel ratio of the exhaust gas becomes a rich side value slightly richer than a stoichiometric air fuel ratio, and carries out the determination of deterioration of the NOx catalyst 4 based on the NH₃ concentration which is detected by the downstream side NOx sensor 8 at this time. Here, NOx and NH₃ are detected as NOx by the downstream side NOx sensor 8. For this reason, it is difficult to determine whether NH₃ has been detected or NOx has been detected by the downstream side NOx sensor 8. However, by making the air fuel ratio of the exhaust gas to be a rich air fuel ratio, almost no NOx will be included in the exhaust gas flowing out of the NOx catalyst 4. Accordingly, what is detected by the downstream side NOx sensor 8 at this time will be NH₃.

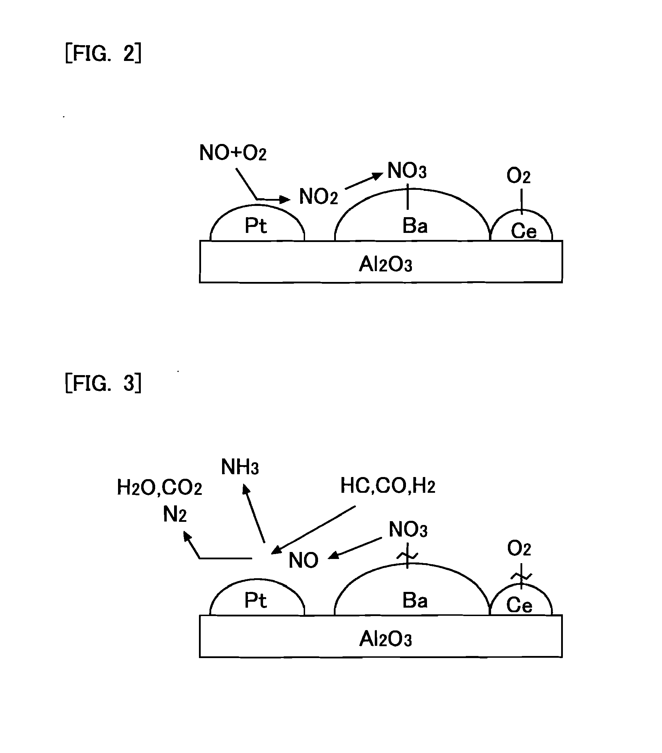

Here, Fig. 2 is a view for explaining a NOx storage or adsorption function in the NOx catalyst 4. Also, Fig. 3 is a view for explaining a NOx reduction function in the NOx catalyst 4.

When the air fuel ratio of the exhaust gas is lean, the NOx catalyst 4 functions to oxidize NO with O₂ on Pt to form NO₃ and to cause Ba to adsorb or store it as Ba(NO₃)₂. On the other hand, when the reducing agent is supplied to make the air fuel ratio of the exhaust gas rich, Ba(NO₃)₂ will be reduced to NO₂, which will be released and further reduced to N₂ on Pt. At this time, in the NOx catalyst 4, NO and H₂ react with each other to form NH₃ and H₂O. In addition, HC and NO react also react with each other to form NH₃, H₂O and CO₂. The NH₃ thus formed reacts with H₂ or O₂ to form NO in the downstream side NOx sensor 8, so that it is detected as NOx. That is, NH₃ is detected in the downstream side NOx sensor 8.

In addition, Ce occludes or stores oxygen at the time of a lean air fuel ratio, and releases oxygen at the time of a rich air fuel ratio. When the NOx catalyst 4 deteriorates, Ce will also deteriorate and the oxygen occlusion or storage capacity and the oxygen release capacity thereof will decrease. That is, the larger the extent of the deterioration of the NOx catalyst, the smaller becomes the amount of O₂ to be occluded or stored in the NOx catalyst at the time of a lean air fuel ratio, and at the same time, the smaller becomes the amount of O₂ to be released at the time of a rich air fuel ratio.

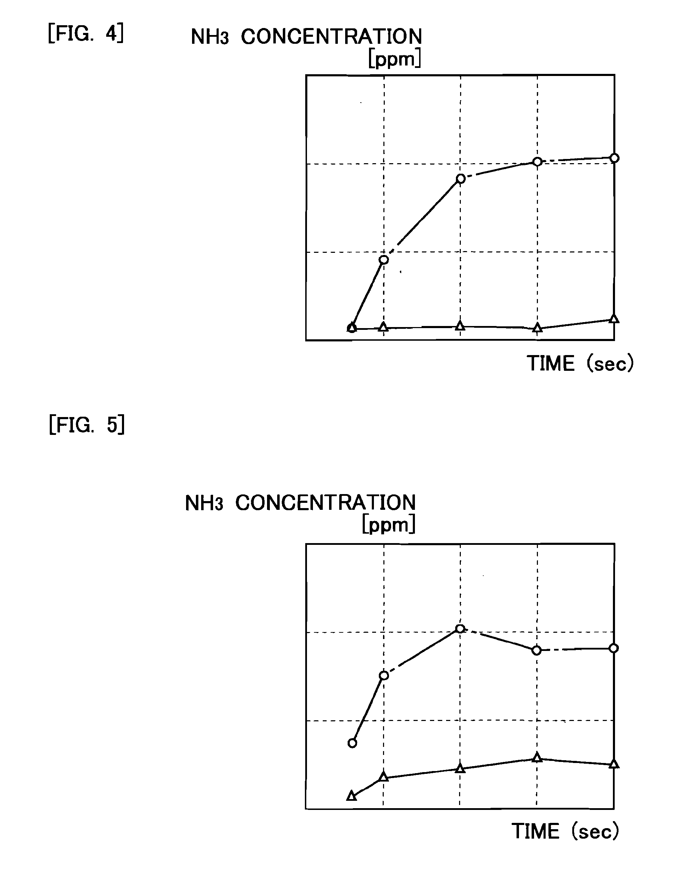

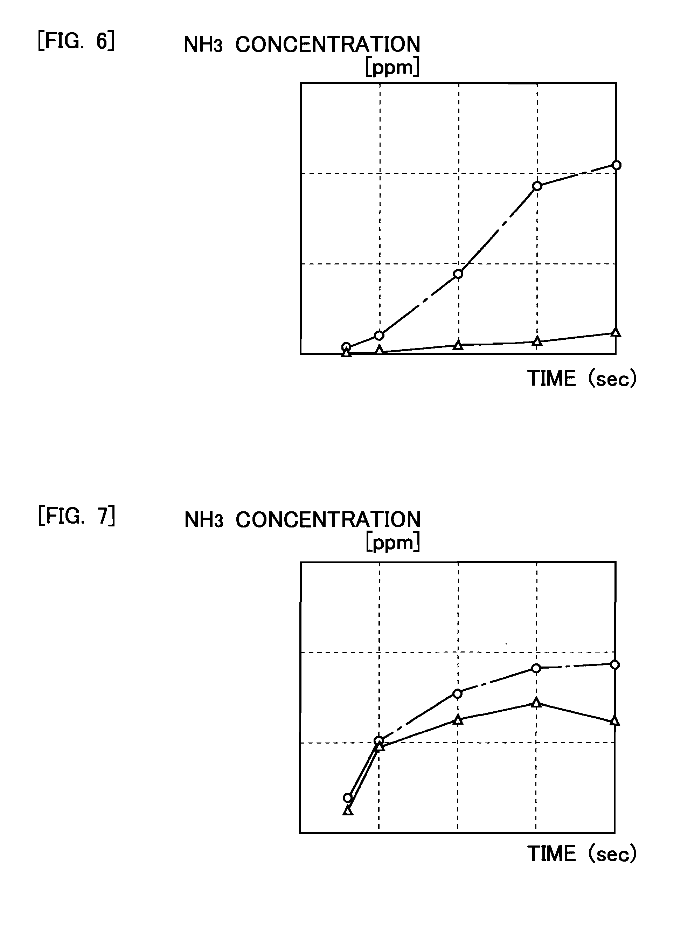

Next, the relation between the amount of NOx stored in the NOx catalyst 4 and the amount of the supply of the reducing agent will be explained. Fig. 4 is a time chart showing the change over time of the NH₃ concentration at the downstream side of the NOx catalyst 4 when rich spike control is carried out with NOx being not stored in the NOx catalyst 4, in cases where the NOx catalyst 4 is normal. Fig. 5 is a time chart showing the change over time of the NH₃ concentration at the downstream side of the NOx catalyst 4 when rich spike control is carried out with a predetermined amount of NOx being stored in the NOx catalyst 4, in cases where the NOx catalyst 4 is normal. Fig. 6 is a time chart showing the change over time of the NH₃ concentration at the downstream side of the NOx catalyst 4 when rich spike control is carried out with NOx being not stored in the NOx catalyst 4, in cases where the NOx catalyst 4 has deteriorated. Fig. 7 is a time chart showing the change over time of the NH₃ concentration at the downstream side of the NOx catalyst 4 when rich spike control is carried out with a predetermined amount of NOx being stored in the NOx catalyst 4, in cases where the NOx catalyst 4 has deteriorated.

In each of Fig. 4 through Fig. 7, a solid line indicates a case where the reducing agent is supplied so that the air fuel ratio of the exhaust gas becomes a predetermined rich air fuel ratio at the rich side slightly richer than the stoichiometric air fuel ratio, and an alternate long and short dash line indicates a case where the reducing agent is supplied so that the air fuel ratio of the exhaust gas becomes lower than the predetermined rich air fuel ratio. Here, the longer the period of time in which the reducing agent is injected from the injection valve 5, the larger becomes the amount of the supply of the reducing agent, and the larger becomes the amount of decrease of the air fuel ratio. For this reason, the air fuel ratio of the exhaust gas can be adjusted by adjusting the fuel injection period of the reducing agent. Here, note that the normal catalyst 4 is the NOx catalyst 4 in which, though Pt has deteriorated, the extent of the deterioration thereof is within an allowable range. Also, the deteriorated catalyst 4 is the NOx catalyst 4 of which the extent of the deterioration exceeds the allowable range.

As shown in Fig. 4 and Fig. 5, in the normal NOx catalyst 4, when the reducing agent is supplied, irrespective of the storage amount of NOx, so that the air fuel ratio of the exhaust gas becomes the above-mentioned predetermined rich air fuel ratio, the amount of NH₃ to be generated will become relatively small (solid line). On the other hand, in the normal NOx catalyst 4, when the reducing agent is supplied, irrespective of the storage amount of NOx, so that the air fuel ratio of the exhaust gas becomes lower than the above-mentioned predetermined rich air fuel ratio, the amount of NH₃ to be generated will become relatively large (an alternate long and short dash line).

In addition, as shown in Fig. 6, in the deteriorated NOx catalyst 4, when the reducing agent is supplied, at the time of NOx having not been stored, so that the air fuel ratio of the exhaust gas becomes the above-mentioned predetermined rich air fuel ratio, the amount of NH₃ to be generated will become relatively small (solid line). However, as shown in Fig. 7, in the deteriorated NOx catalyst 4, when the reducing agent is supplied, at the time of the predetermined amount of NOx having been stored, so that the air fuel ratio of the exhaust gas becomes the above-mentioned predetermined rich air fuel ratio, the amount of NH₃ to be generated will become relatively large (solid line). On the other hand, as shown in Fig. 6 and Fig. 7, in the deteriorated NOx catalyst 4, when the reducing agent is supplied, irrespective of the storage amount of NOx, so that the air fuel ratio of the exhaust gas becomes lower than the above-mentioned predetermined rich air fuel ratio, the amount of NH₃ to be generated will become relatively large (an alternate long and short dash line).

That is, in cases where the reducing agent is supplied so that the air fuel ratio of the exhaust gas becomes the above-mentioned predetermined rich air fuel ratio, the amount of NH₃ to be generated becomes large only when the NOx catalyst 4 has deteriorated and NOx has been stored in the NOx catalyst 4.

Here, Ce added to the NOx catalyst 4 occludes or stores O₂ at the time of a lean air fuel ratio, and releases O₂ at the time of a rich air fuel ratio. In the case of the normal NOx catalyst 4, when the reducing agent is supplied so that the air fuel ratio of the exhaust gas becomes the above-mentioned predetermined rich air fuel ratio, O₂ released from Ce and the reducing agent (HC, H₂) react with each other. For this reason, it is considered that the reducing agent reacting with NOx runs short, and so NH₃ to be generated decreases.

On the other hand, in the case of the deteriorated NOx catalyst 4, Ce has also deteriorated, and O₂ released at the time of supplying the reducing agent decreases. For this reason, in the deteriorated NOx catalyst 4, when the reducing agent is supplied so that the air fuel ratio of the exhaust gas becomes the above-mentioned predetermined rich air fuel ratio, the amount of O₂ reacting with the reducing agent will be small, and a large amount of reducing agent arrives at Ba. Then, this reducing agent and NOx released from Ba react with each other to generate NH₃. Accordingly, the larger the extent of the deterioration of the NOx catalyst 4, the more becomes the amount of the reducing agent arriving at Ba, and hence, the amount of NH₃ to be generated increases.

Accordingly, if a large amount of NH₃ flows out of the NOx catalyst 4 in cases where the reducing agent is supplied, at the time of NOx having been stored in the NOx catalyst 4, so that the air fuel ratio of the exhaust gas becomes the above-mentioned predetermined rich air fuel ratio, a determination can be made that the NOx catalyst 4 has deteriorated.

Here, note that the above-mentioned predetermined rich air fuel ratio is an air fuel ratio at which in cases where NOx has been stored in the NOx catalyst 4, the difference in the NH₃ concentration between the normal NOx catalyst 4 and the deteriorated NOx catalyst 4 becomes large, and which is, for example, a value between from 14 to 14.7. That is, at the time of carrying out the determination of deterioration of the NOx catalyst 4, the amount of the supply of the reducing agent is adjusted in such a manner that the air fuel ratio of the exhaust gas becomes a value between from 14 to 14.7, for example.

In addition, at the time of performing the determination of deterioration of the NOx catalyst 4, a certain amount of NOx has to be stored in the NOx catalyst 4. Accordingly, the determination of deterioration of the NOx catalyst 4 is carried out when an amount of NOx more than a predetermined amount has been stored in the NOx catalyst 4. This predetermined amount has been obtained in advance through experiments, etc., for example, as a storage amount of NOx at which NH₃ is generated in the deteriorated NOx catalyst 4 when the air fuel ratio of the exhaust gas is adjusted to the above-mentioned predetermined rich air fuel ratio.

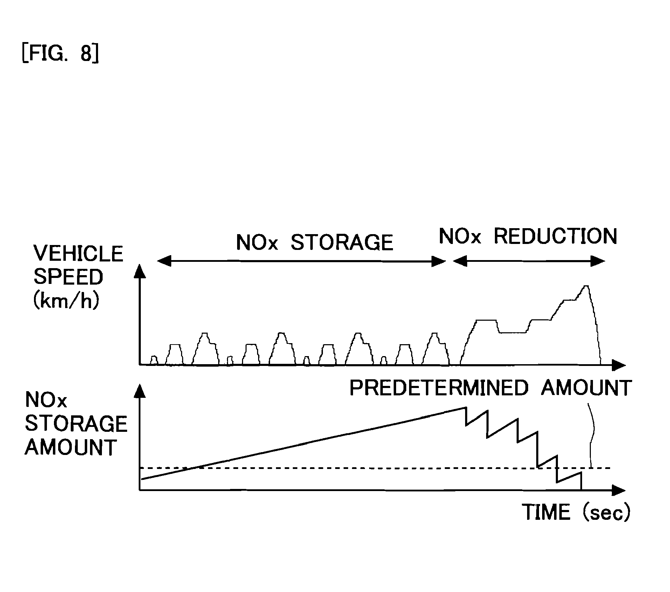

Here, Fig. 8 is a time chart showing the change over time of the storage amount of NOx in the NOx catalyst 4 and the speed of a vehicle on which the internal combustion engine 1 is mounted. In this embodiment, when the temperature of the NOx catalyst 4 becomes equal to or higher than a predetermined temperature, rich spike control is started. As a result of this, the consumption amount of fuel required to raise the temperature of the NOx catalyst 4 can be decreased. That is, when the vehicle speed is low, the temperature of the NOx catalyst 4 is relatively low, and so, the reducing agent is not supplied to the NOx catalyst 4, but NOx is caused to be stored therein. Then, after the vehicle speed becomes high and hence the temperature of the NOx catalyst 4 becomes relatively high, the reducing agent is supplied so that NOx is made to be reduced.

Here, note that the amount of NOx (mg/sec) to be discharged per unit time from the internal combustion engine 1 is in correlation with the number of engine revolutions per unit time and the engine load. For this reason, the amount of NOx to be stored in the NOx catalyst 4 per unit time is in correlation with the number of engine revolutions per unit time and the engine load. That is, the NOx amount to be stored in the NOx catalyst 4 per unit time is in correlation with the number of engine revolutions per unit time and the engine load. In addition, the amount of NOx to be stored in the NOx catalyst 4 per unit time changes by the temperature of the NOx catalyst 4 or the temperature of the exhaust gas, too. Accordingly, if the relation among the number of engine revolutions per unit time, the engine load, the temperature, and the amount of NOx to be stored in the NOx catalyst 4 per unit time are mapped in advance through experiments, etc., the amount of NOx to be stored in the NOx catalyst 4 per unit time can be obtained based on the map. Then, by integrating this amount of NOx to be stored in the NOx catalyst 4 per unit time, the amount of NOx stored in the NOx catalyst 4 (the storage amount of NOx) can be calculated.

In addition, based on an output value of the upstream side NOx sensor 7, an amount of NOx flowing into the NOx catalyst 4 can be calculated. Also, based on an output value of the downstream side NOx sensor 8, an amount of NOx flowing out of the NOx catalyst 4 can be calculated. Then, the amount of NOx stored in the NOx catalyst 4 can also be calculated by subtracting the amount of NOx flowing out of the NOx catalyst 4 from the amount of NOx flowing into the NOx catalyst 4. Here, note that the amount of NOx to be stored in the NOx catalyst 4 per unit time can be based on the output value of the upstream side NOx sensor 7 can also be roughly estimated or approximated. In addition, note that in this embodiment, the ECU 10, which calculates the storage amount of NOx, corresponds to a storage amount detection device in the present invention.

Then, when the temperature of the NOx catalyst 4 becomes equal to or higher than a temperature suitable for the reduction of NOx, rich spike control is carried out so that NOx is made to be reduced. At this time, when the storage amount of NOx is equal to or more than the predetermined amount, the determination of deterioration of the NOx catalyst 4 can be carried out by adjusting the air fuel ratio of the exhaust gas to the above-mentioned predetermined rich air fuel ratio. That is, the valve opening time of the injection valve 5 is controlled in such a manner that the air fuel ratio of the exhaust gas becomes the above-mentioned predetermined rich air fuel ratio. Then, based on the detected value of the downstream side NOx sensor 8 at this time, the determination of deterioration of the NOx catalyst 4 is carried out. For example, when the maximum value of the detected value of the downstream side NOx sensor 8 within a predetermined period of time after starting the supply of the reducing agent is equal to or greater than the threshold value, a determination is made that the NOx catalyst 4 has deteriorated. In addition, when the integrated value of the detected value of the downstream side NOx sensor 8 in the predetermined period of time after starting the supply of the reducing agent is equal to or greater than the threshold value, a determination may be made that the NOx catalyst 4 has deteriorated. The predetermined period of time can be obtained through experiments, etc., as a period of time in which NH₃ is generated.

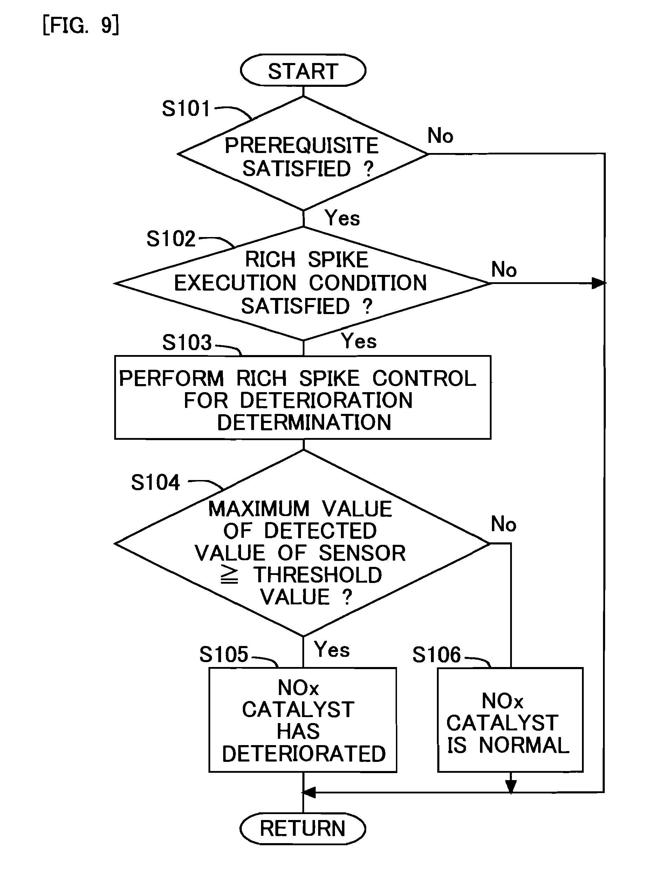

Fig. 9 is a flow chart showing a flow for the determination of deterioration of the NOx catalyst 4. This routine is carried out by means of the ECU 10 at each predetermined period of time.

In step S101, it is determined whether a prerequisite or precondition for performing the determination of deterioration of the NOx catalyst 4 is satisfied. For example, when the downstream side NOx sensor 8 is normal and when the temperature of the NOx catalyst 4 is the temperature suitable for the reduction of NOx, a determination is made that the prerequisite is satisfied. Whether the downstream side NOx sensor 8 is normal or not can be determined by means of well-known techniques. In addition, the temperature suitable for the reduction of NOx is a temperature at the time when the NOx catalyst 4 has been activated, for example. The temperature of the NOx catalyst 4 is detected by the temperature sensor 9.

In cases where an affirmative determination is made in step S101, the routine advances to step S102, whereas in cases where a negative determination is made, this routine is ended.

In step S102, it is determined whether a condition for executing the rich spike control (hereinafter a rich spike execution control) is satisfied. The rich spike execution condition is a condition under which rich spike control is executed for carrying out the determination of deterioration of the NOx catalyst 4. For example, when an amount of NOx equal to or more than the predetermined amount is stored in the NOx catalyst 4, a determination is made that the rich spike execution condition is satisfied. The predetermined amount referred to herein has been obtained through experiments, etc., in advance as a value at which when the reducing agent is supplied, a sufficient amount of NH₃ will be generated so that the determination of deterioration can be made. That is, unless NOx is occluded or stored in the NOx catalyst 4, NH₃ will not be generated even if NOx catalyst 4 has deteriorated. In that case, the determination of deterioration becomes difficult, and hence, the fact that an amount of NOx equal to or more than the predetermined amount has been stored in the NOx catalyst 4 is adopted as a condition.

In cases where an affirmative determination is made in step S102, the routine goes to step S103, whereas in cases where a negative determination is made, this routine is ended.

In step S103, rich spike control for the determination of deterioration of the NOx catalyst 4 is carried out. That is, the reducing agent is supplied so that the air fuel ratio of the exhaust gas becomes the predetermined rich air fuel ratio at the rich side slightly richer than the stoichiometric air fuel ratio.

In step S104, it is determined whether the maximum value of the detected value of the downstream side NOx sensor 8 is equal to or larger than the threshold value. This threshold value is a detected value which becomes a boundary of whether the NOx catalyst 4 has deteriorated, and has been set in advance. Here, note that in this step, it may be determined whether the integrated value of the detected value of the downstream side NOx sensor 8 is equal to or greater than the threshold value. This integrated value may also be an integrated value during the time when NH₃ is detected by the downstream side NOx sensor 8 under rich spike control, or may also be an integrated value during the time when rich spike control is carried out, or may also be an integrated value in a predetermined period of time. The integrated value is obtained by adding the detected value of the downstream side NOx sensor 8, which is read for example in a predetermined period of time, in a sequential manner.

In cases where an affirmative determination is made in step S104, the routine advances to step S105, in which a determination is made that the NOx catalyst 4 has deteriorated. On the other hand, in cases where a negative determination is made in step S104, the routine advances to step S106, in which a determination is made that the NOx catalyst 4 is normal. Here, note that in this embodiment, the ECU 10, which carries out the processing of steps S103 through step S106, corresponds to a determination device in the present invention.

In this manner, the determination of deterioration of the NOx catalyst 4 can be carried out based on the detected value of the downstream side NOx sensor 8 at the time of supplying the reducing agent so that the air fuel ratio of the exhaust gas becomes the predetermined rich air fuel ratio. At this time, if the maximum value of the detected value of the downstream side NOx sensor 8 is known, the determination of deterioration can be made immediately, it is not necessary to wait until the detected value is stabilized, or it is not necessary to wait until NOx is stored after that. That is, the determination of deterioration can be carried out quickly.

Here, note that in this embodiment, it may be determined that the larger the maximum value of the detected value of the downstream side NOx sensor 8 at the time of carrying out rich spike control for the purpose of the predetermined rich air fuel ratio, the higher becomes the extent of the deterioration of the NOx catalyst 4. Similarly, it may also be determined that the larger the integrated value of the detected value of the downstream side NOx sensor 8, the higher becomes the extent of the deterioration of the NOx catalyst 4.

In addition, although in this embodiment, NH₃ is detected by the use of the downstream side NOx sensor 8, there can also be used another sensor capable of detecting NH₃.

### [EXPLANATION OF REFERENCE NUMERALS AND CHARACTERS]

- 1: internal combustion engine
- 2: exhaust passage
- 4: NOx storage reduction catalyst
- 5: injection valve
- 7: upstream side NOx sensor
- 8: downstream side NOx sensor
- 9: temperature sensor
- 10: ECU
- 11: accelerator pedal
- 12: accelerator opening sensor
- 13: crank position sensor

## Claims

1. A catalyst deterioration determination system which determines a deterioration of a NOx storage reduction catalyst which is arranged in an exhaust passage of an internal combustion engine in such a manner that it stores NOx and reduces the NOx stored therein by the supply of a reducing agent, said system comprising:
a supply device that supplies the reducing agent to said NOx storage reduction catalyst thereby to change an air fuel ratio of an exhaust gas passing through said NOx storage reduction catalyst:
an NH₃ detection device that detects NH₃ in the exhaust gas at the downstream side of said NOx storage reduction catalyst;
a control device that adjusts an amount of the reducing agent in such a manner that the air fuel ratio of the exhaust gas becomes a predetermined rich air fuel ratio at the time when the reducing agent is supplied from said supply device; and
a determination device that makes a determination that said NOx storage reduction catalyst has deteriorated, when a detected value of said NH₃ detection device becomes equal to or greater than a threshold value, at the time of supplying the reducing agent while adjusting the amount of the reducing agent in such a manner that the air fuel ratio of the exhaust gas becomes said predetermined rich air fuel ratio.

2. The catalyst deterioration determination system as set forth in claim 1, further comprising:
a storage amount detection device that detects or estimates an amount of NOx which has been stored in said NOx storage reduction catalyst;
wherein when the amount of NOx having been stored in said NOx storage reduction catalyst is equal to or more than a predetermined amount, said determination device makes a determination as to whether or not said NOx storage reduction catalyst has deteriorated.

3. The catalyst deterioration determination system as set forth in claim 1 or 2, wherein
when a maximum value of the detected value of said NH₃ detection device is equal to or greater than the threshold value, said determination device makes a determination that said NOx storage reduction catalyst has deteriorated.

4. The catalyst deterioration determination system as set forth in claim 1 or 2, wherein
when an integrated value of the detected value of said NH₃ detection device is equal to or greater than the threshold value, said determination device makes a determination that said NOx storage reduction catalyst has deteriorated.

5. The catalyst deterioration determination system as set forth in any one of claims 1 through 4, wherein
said control device adjusts the amount of the reducing agent so that the air fuel ratio of the exhaust gas becomes a value between 14 and 14.7.

6. The catalyst deterioration determination system as set forth in any one of claims 1 through 5, wherein
said NH₃ detection device is a NOx sensor which detects NOx and NH₃ in the exhaust gas.
